# EUROPEAN PATENT SPECIFICATION

(11) **EP 2 390 133 B1**
(45) Date of publication and mention of the grant of the patent: **06.03.2019**
(21) Application number: 11166710.1
(22) Date of filing: 19.05.2011
(51) Int. Cl.: B60N 2/02, B60N 2/50

(54) **Active seat suspension system**
Aktives Sitzaufhängungssystem
Système de suspension de siège actif

(30) Priority: 25.05.2010 US 787047
(43) Date of publication of application: 30.11.2011
(73) Proprietor: Deere & Company, Moline, IL 61265 (US)
(72) Inventor: Keen, Eric A, Manhattan, KS 66502 (US)
(74) Representative: Dehnhardt, Florian Christopher

(56) References cited:
- EP-A2- 1 852 302
- GB-A- 2 309 894
- US-A1- 2007 278 025

## Description

The present invention relates to an active seat suspension system.
Agricultural and construction equipment must often be driven over rough terrain. As a result, the operator may experience a bumpy or uncomfortable ride. To minimize the roughness of the operator's ride, operator seats have been equipped with a suspension, typically a passive system consisting of an air spring and hydraulic damper. To improve the ride, active seat suspension systems have been used wherein the hydraulic damper is replaced with a hydraulic cylinder. While significantly improving the ride by actively controlling seat top velocity, the suspension performance is limited by the response speed of the hydraulic system, including a hydraulic control valve for the hydraulic cylinder. Additionally, a hydraulic active seat suspension system can be noisy due to the hydraulic fluid flow. Such an active seat suspension system also requires high pressure hydraulic lines to enter and/or exit the operator cab, consumes significant power over the minimum required by the suspension due to a pressure reducing valve, and must be tuned to the ride performance of individual vehicles, which requires hardware changes to the hydraulic control valve.

Examples of prior art seat suspension systems are known from GB 2 309 894 A, wherein a scissors linkage is in operative communication with a pneumatic air spring including a series of valves, or from US 2007/278025 A1, showing a similar scissors linkage with a pneumatic cylinder and a tension belt operatively coupled to the seat via a retainer and a bracket. Accordingly, an object of this invention is to provide an active seat suspension system which is quiet and is capable for being actively controlled.
A further object of the invention is to provide such an active seat suspension system which does not require high pressure hydraulic lines to enter and/or exit the operator cab.
A further object of the invention is to provide such an active seat suspension system which consumes little power.

These and other objects are achieved by the present invention as defined by the technical features set forth in claim 1, wherein an active seat suspension system comprises a base frame, a seat carrier frame, and a linkage mounted on the base frame and supporting the seat carrier frame. The linkage comprises a first link which is pivotally coupled to the base frame and the seat carrier frame. The linkage further comprises a second link which is pivotally coupled to the base frame and the seat carrier frame and which is pivotally coupled to the first link about a link pivot axis A. A rotary motor has an outer housing and an output shaft which rotates with respect to the outer housing. The outer housing is coupled to the first link and the output shaft is drivingly coupled to the second link, so that rotation of the output shaft relative to the outer housing causes the first and second links to rotate relative to each other and varies a space between the seat carrier frame and the base frame.

For a complete understanding of the objects, techniques, and structure of the invention reference should be made to the following detailed description and accompanying drawings, wherein similar components are designated by identical reference numerals:
- Fig. 1: is a perspective view of an active seat suspension system embodying the invention, and
- Fig. 2: is an exploded perspective view of the active seat suspension system of Fig. 1 with parts removed for clarity.

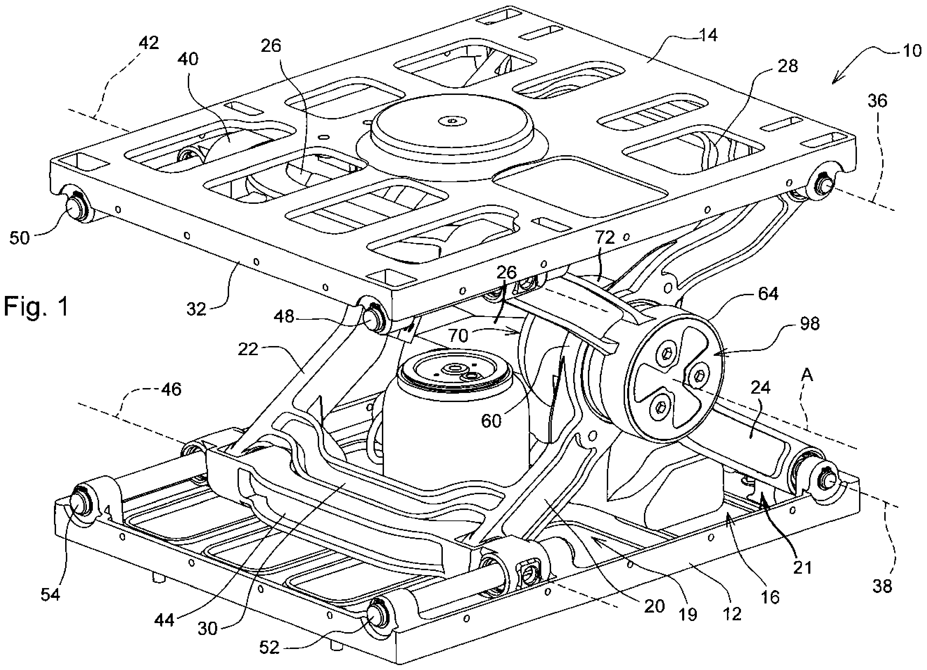

Referring to Fig. 1, the active seat suspension system 10 includes a base frame 12 for mounting on a vehicle chassis and a seat carrier frame 14 which is adapted to support a seat assembly (not shown). The seat carrier frame 14 is supported with respect to the base frame 12 by a linkage 16, preferably a scissors mechanism.

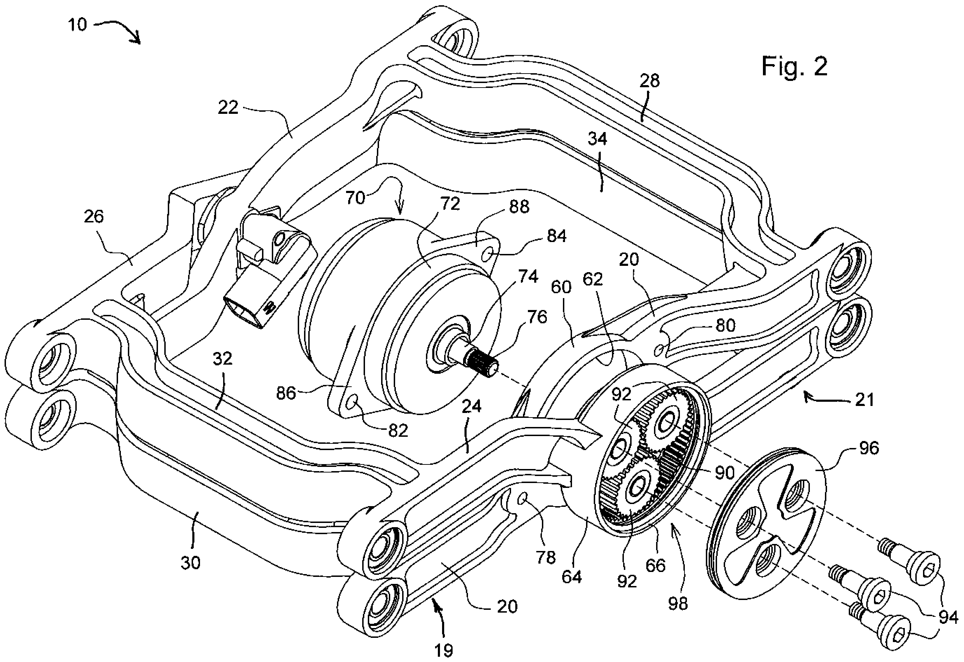

As best shown in Fig. 2, the linkage 16 includes a first link 19 with a pair of first arms 20 and 22, and a second link 21 with a pair of second arms 24 and 26. First arms 20 and 22 are interconnected by an upper cross arm 28 and a lower cross arm 30. Second arms 24 and 26 are interconnected by an upper cross arm 32 and a lower cross arm 34.

Upper ends of first arms 20 and 22 are pivotally coupled to one end of the seat carrier frame 14 at a pivot axis 36. Lower ends of second arms 24 and 26 are pivotally coupled to one end of the base frame 12 at a pivot axis 38.
Upper ends of second arms 24 and 26 are pivotally coupled to an upper slide member 40 at a pivot axis 42. Lower ends of first arms 20 and 22 are pivotally coupled to a lower slide member 44 at a pivot axis 46. The upper slide member 40 is slidably supported by upper slide rods 48 and 50 which are fixed to the seat carrier frame 14. The lower slide member 44 is slidably supported by lower slide rods 52 and 54 which are fixed to the base frame 12. Thus, the lower ends of first arms 20 and 22 are pivotally and slidably coupled to the base frame 12, and the upper ends of the second arms 24 and 26 are pivotally and slidably coupled to the seat carrier frame 14. First arm 20 has a central portion 60 which surrounds a central opening 62. Second arm 24 has a central portion 64 which surrounds a central opening 66.
The active seat suspension system 10 also includes a rotary motor 70, preferably an electric motor. Rotary motor 70 includes an outer housing 72 and an output shaft 74 which projects outwardly from and rotates with respect to the outer housing 72. Gear teeth are formed on the end of the output shaft 74 forming a sun gear 76. Outer housing 72 is received by central opening 62 and is fixed to the first arm 20 by bolts which extend through bores 78 and 80 in the first arm 20 and which are threaded into bores 82 and 84 formed in flanges or ears 86 and 88 which project from the outer housing 72.
A ring gear 90 is fixedly mounted in or formed on inner side of central opening 66 of central portion 64. Three planet gears 92 are mounted within the ring gear 90 for meshing engagement with the sun gear 64 and the ring gear 90. The planet gears 92 are rotatably supported by pins 94 which are carried by planet carrier 96. Sun gear 76, planet gears 92 and ring gear 90 forming a planetary transmission being part of a gear reduction unit 98 which couples the output shaft 74 to the second arm 24. As a result, the first and second links 19 and 21 are pivotally coupled to each other about a link pivot axis A, which is aligned with the axis of the output shaft 74.

With this active seat suspension system 10, rotation of the sun gear 76 by the rotary motor 70 causes the first arm 20 and the second arm 24 to rotate relative to each other, which in turn causes the seat carrier frame 14 to move towards and away from the base frame 12.

Thus, the active seat suspension system 10 uses the rotary motor 70 and the gear reduction unit 98 as a primary power delivery source instead of a conventional hydraulic cylinder. Rotary motor 70 and gear reduction unit 98 driving one link of the scissors mechanism relative to the other link via a central pivot joint. One link is connected to the outer housing 72 and the other link is connected to an output of the gear reduction unit 98. The use of a high reduction ratio in the gear reduction unit 98 allows the use of a compact and relatively low torque rotary motor 70. The seat suspension system 10 is more responsive dynamically due to the low inertia of the rotary motor 70. It also consumes significantly less power than a comparable active seat suspension system driven by a hydraulic cylinder, since there is no hydraulic pressure reducing valve, and there are no hydraulic lines entering and/or exiting the operator cab.

## Claims

1. Active seat suspension system, comprising a base frame (12); a seat carrier frame (14); a linkage (16) mounted on the base frame (12) and supporting the seat carrier frame (14), the linkage (16) comprising a first link (19) being pivotally coupled to the base frame (12) and the seat carrier frame (14), and a second link (21) being pivotally coupled to the base frame (12) and the seat carrier frame (14) and being pivotally coupled to the first link (19) about a link pivot axis A; and a rotary motor (70) having an outer housing (72) and an output shaft (74) which rotates with respect to the outer housing (72), **characterized by** the outer housing (72) being coupled to the first link (19), and the output shaft (74) being drivingly coupled to the second link (21) and being aligned with the link pivot axis A, so that rotation of the output shaft (74) relative to the outer housing (72) causes the first and second links (19, 21) to rotate relative to each other and varies a space between the seat carrier frame (14) and the base frame (12)

2. The active seat suspension system according to claim 1, **characterized by** a gear reduction unit (98) coupled between the output shaft (74) and the second link (21).

3. The active seat suspension system according to claim 2, **characterized by** the gear reduction unit (98) comprising a planetary transmission having a sun gear (76) fixed to the output shaft (74), a ring gear (90) fixed to the second link (21), and a plurality of planet gears (92) meshing with the sun gear (76) and the ring gear (90).

4. The active seat suspension system according to claim 2 or 3, **characterized in that** the gear reduction unit (98) is received by a central opening (66) formed in the second link (21).

5. The active seat suspension system according to one of claims 1 to 4, **characterized in that** the outer housing (72) is non-rotatably coupled to the first link (19).

6. The active seat suspension system according to one of claims 1 to 5, **characterized in that** the outer housing (72) is received by a central opening (62) formed in the first link (19).

## Patentansprüche

1. Aktives Sitzaufhängungssystem, umfassend einen Basisrahmen (12); einen Sitzträgerrahmen (14); ein an dem Basisrahmen (12) montiertes Gestänge (16), das den Sitzträgerrahmen (14) stützt, wobei das Gestänge (16) eine erste Verbindung (19) umfasst, die drehbar mit dem Basisrahmen (12) und dem Sitzträgerrahmen (14) gekoppelt ist, und eine zweite Verbindung (21), die drehbar mit dem Basisrahmen (12) und dem Sitzträgerrahmen (14) gekoppelt ist und über eine Verbindungsdrehachse A drehbar mit der ersten Verbindung (19) gekoppelt ist; und einen Drehmotor (70) mit einem äußeren Gehäuse (72) und einer Ausgangswelle (74), die sich in Bezug auf das äußere Gehäuse (72) dreht, **dadurch gekennzeichnet, dass** das äußere Gehäuse (72) an die erste Verbindung (19) gekoppelt ist und die Ausgangswelle (74) treibend mit der zweiten Verbindung (21) gekoppelt und auf die Verbindungsdrehachse A ausgerichtet ist, sodass eine Drehung der Ausgangswelle (74) relativ zu dem äußeren Gehäuse (72) die erste und zweite Verbindung (19, 21) veranlasst, sich relativ zueinander zu drehen, und einen Raum zwischen dem Sitzträgerrahmen (14) und dem Basisrahmen (12) verändert.

2. Aktives Sitzaufhängungssystem nach Anspruch 1, **gekennzeichnet durch** eine Getriebeuntersetzungseinheit (98), die zwischen die Ausgangswelle (74) und die zweite Verbindung (21) gekoppelt ist.

3. Aktives Sitzaufhängungssystem nach Anspruch 2, **dadurch gekennzeichnet, dass** die Getriebeuntersetzungseinheit (98) Folgendes umfasst: ein Planetengetriebe mit einem Sonnenrad (76), das an der Ausgangswelle (74) befestigt ist, einen Zahnkranz (90), der an der zweiten Verbindung (21) befestigt ist, und eine Vielzahl von Planetenrädern (92), die sich im Eingriff mit dem Sonnenrad (76) und dem Zahnkranz (90) befinden.

4. Aktives Sitzaufhängungssystem nach Anspruch 2 oder 3, **dadurch gekennzeichnet, dass** die Getriebeuntersetzungseinheit (98) von einer mittleren Öffnung (66) aufgenommen wird, die in der zweiten Verbindung (21) ausgebildet ist.

5. Aktives Sitzaufhängungssystem nach einem der Ansprüche 1 bis 4, **dadurch gekennzeichnet, dass** das äußere Gehäuse (72) nicht drehbar mit der ersten Verbindung (19) gekoppelt ist.

6. Aktives Sitzaufhängungssystem nach einem der Ansprüche 1 bis 5, **dadurch gekennzeichnet, dass** das äußere Gehäuse (72) von einer mittleren Öffnung (62) aufgenommen wird, die in der ersten Verbindung (19) ausgebildet ist.

## Revendications

1. Système de suspension de siège actif, comprenant un cadre de base (12); un cadre de support de siège (14); une tringlerie (16) montée sur le cadre de base (12) et supportant le cadre de support de siège (14), la tringlerie (16) comprenant une première liaison (19) qui est couplée de façon pivotante au cadre de base (12) et au cadre de support de siège (14), et une seconde liaison (21) qui est couplée de façon pivotante au cadre de base (12) et au cadre de support de siège (14) et qui est couplée de façon pivotante à la première liaison (19) autour d'un axe de pivotement de liaison A; et un moteur rotatif (70) présentant un boîtier extérieur (72) et un arbre de sortie (74) qui tourne par rapport au boîtier extérieur (72), **caractérisé en ce que** le boîtier extérieur (72) est couplé à la première liaison (19), et l'arbre de sortie (74) est couplé de façon entraînante à la seconde liaison (21) et est aligné avec l'axe de pivotement de liaison A, de telle sorte que la rotation de l'arbre de sortie (74) par rapport au boîtier extérieur (72) entraîne les première et seconde liaisons (19, 21) à tourner l'une par rapport à l'autre et modifie un espace entre le cadre de support de siège (14) et le cadre de base (12).

2. Système de suspension de siège actif selon la revendication 1, **caractérisé par** une unité de démultiplication (98) couplée entre l'arbre de sortie (74) et la seconde liaison (21).

3. Système de suspension de siège actif selon la revendication 2, **caractérisé en ce que** l'unité de démultiplication (98) comprend une transmission planétaire comprenant une roue solaire (76) fixée à l'arbre de sortie (74), une couronne dentée (90) fixée à la seconde liaison (21), et une pluralité d'engrenages planétaires (92) qui engrènent avec la roue solaire (76) et la couronne dentée (90).

4. Système de suspension de siège actif selon la revendication 2 ou 3, **caractérisé en ce que** l'unité de démultiplication (98) est reçue par une ouverture centrale (66) formée dans la seconde liaison (21).

5. Système de suspension de siège actif selon l'une des revendications 1 à 4, **caractérisé en ce que** le boîtier extérieur (72) est couplé de façon non rotative à la première liaison (19).

6. Système de suspension de siège actif selon l'une des revendications 1 à 5, **caractérisé en ce que** le boîtier extérieur (72) est reçu par une ouverture centrale (62) formée dans la première liaison (19).
